(19) Europäisches Patentamt
European Patent Office
Office européen des brevets

(11) **EP 1 272 805 B1**

(12) **FASCICULE DE BREVET EUROPEEN**

(45) Date de publication et mention
de la délivrance du brevet:
**28.03.2007 Bulletin 2007/13**

(51) Int Cl.:
***F41G 3/22*** *(2006.01)* ***G01B 7/004*** *(2006.01)*

(21) Numéro de dépôt: **01923759.3**

(86) Numéro de dépôt international:
**PCT/FR2001/001062**

(22) Date de dépôt: **06.04.2001**

(87) Numéro de publication internationale:
**WO 2001/079778 (25.10.2001 Gazette 2001/43)**

(54) **PROCEDE ET DISPOSITIF MAGNETIQUE DE DETERMINATION DE L'ORIENTATION**

VERFAHREN UND MAGNETISCHE VORRICHTUNG ZUR BESTIMMUNG DER ORIENTIERUNG

METHOD AND MAGNETIC DEVICE FOR DETERMINING ORIENTATION

(84) Etats contractants désignés:
**DE GB SE**

(30) Priorité: **14.04.2000 FR 0004861**

(43) Date de publication de la demande:
**08.01.2003 Bulletin 2003/02**

(73) Titulaire: **THALES AVIONICS S.A.**
**78140 Vélizy Villacoublay (FR)**

(72) Inventeur: **LESCOURRET, Jean-Louis,**
**Thomson-CSF Propriété Int.**
**F-94117 Arcueil Cedex (FR)**

(74) Mandataire: **Esselin, Sophie**
**Marks & Clerk France**
**31-33 Avenue Aristide Briand**
**94117 Arcueil Cedex (FR)**

(56) Documents cités:
**US-A- 4 394 831** **US-A- 4 829 250**
**US-A- 5 767 669**

**Description**

Le domaine de l'invention est la mesure de la position et de l'orientation d'un corps mobile, qui se déplace en translation et en rotation par rapport à un corps, ou structure, fixe.

Notamment, l'invention concerne la détermination de la posture du casque d'un pilote d'aéronefs militaires, dans lesquels la position angulaire d'une cible est déterminée par la visée, au travers d'un système comprenant le visuel de casque du pilote.

Le fonctionnement d'un tel système est rappelé brièvement ci-après : par un dispositif collimateur annexe, le pilote voit, à travers sa visière semi-réfléchissante solidaire du casque, sur l'axe de vision, l'image d'un réticule projeté à l'infini en superposition avec la scène extérieure. Lorsqu'il veut désigner une cible, le pilote amène ce réticule à coïncider avec la cible et signale que la coïncidence est réalisée, au moyen par exemple d'une commande par bouton-poussoir, prévue à cet effet

À condition de repérer, au moment de la signalisation de la coïncidence, la position angulaire exacte du casque, il est possible de déterminer, par rapport à l'avion, la direction de visée et de désigner l'objectif à un système d'arme, ou de pointer dans cette direction un système optique par exemple.

Un dispositif de mesure d'orientation et de position du casque du pilote dans un repère lié à l'aéronef peut consister en un capteur d'orientation et de position constitué de trois bobines électromagnétiques orthogonales et placé sur le casque, et en un émetteur, situé en un point fixe de la cabine, et constitué de trois autres bobines électromagnétiques.

Le procédé consiste alors à faire passer, dans chaque bobine de l'émetteur (formant un trièdre sensiblement orthogonal fixe), un courant électrique. Ces courants font apparaître trois champs magnétiques qui sont captés par les bobines du capteur (formant un trièdre mobile sensiblement orthogonal lié au casque). L'analyse de ces champs magnétiques permet de déterminer la position et l'orientation du trièdre mobile par rapport au trièdre fixe.

Dans ce domaine d'application notamment, il est impératif d'obtenir une mesure précise des champs magnétiques émis par l'émetteur fixe, et détectés par le capteur lié au casque, de manière à désigner avec précision, à un système d'arme, l'objectif sélectionné par le pilote.

On sait depuis longtemps qu'il existe des phénomènes magnétiques susceptibles de prendre naissance dans les corps conducteurs et dans les corps de type ferromagnétique. On sait ainsi qu'en présence d'un champ magnétique extérieur, des courants induits, du type des courants de Foucault, apparaissent dans les éléments conducteurs. On sait également que des inductions magnétiques naissent dans les matériaux perméables, comme les aciers ou les matériaux de susceptibilité magnétique de type fer/nickel.

Lorsqu'on souhaite évaluer un champ magnétique dans un environnement présentant des conducteurs et/ou des corps de type ferromagnétique, il est donc très difficile d'obtenir une mesure précise, en raison des importantes perturbations de champs, provoquées par ces champs induits.

Or, les cockpits d'avions d'armes ou d'hélicoptères de combat comprennent de nombreux éléments conducteurs et/ou ferromagnétiques, qui, notamment en présence des champs magnétiques émis par les trois bobines de l'émetteur, créent de fortes perturbations magnétiques, et faussent la mesure.

Il est donc très difficile, dans ces environnements perturbés, d'obtenir un fonctionnement du viseur de casque qui satisfasse les spécifications de précision statique dans tout le volume de débattement du capteur d'orientation et de position.

On a donc envisagé de compenser les effets des perturbations magnétiques dans les mesures, en tentant d'obtenir une modélisation des perturbations magnétiques, selon plusieurs méthodes complexes de traitement, à partir d'une cartographie très précise de l'environnement réel du système.

Un inconvénient de ces techniques de l'art antérieur, qui mettent en oeuvre une modélisation des champs perturbateurs, est que les produits, et notamment les viseurs de casque obtenus selon ces techniques sont très difficiles à mettre en oeuvre. En effet, ces produits doivent pouvoir s'adapter à tout type de porteurs. De plus, la sensibilité des erreurs par rapport à la stabilité de l'environnement magnétique reste très importante.

Une première méthode de compensation des perturbations magnétiques consiste à réaliser une cartographie magnétique de l'environnement du capteur de position et d'orientation, de manière à constituer un tableau de référence regroupant les valeurs des champs perturbateurs (en anglais « look up table ») ou un modèle de référence. Ce tableau est ensuite utilisé pour corriger les mesures de position et d'orientation du capteur, en cours de fonctionnement. Il est donc nécessaire d'immobiliser l'appareil au sol pendant plusieurs jours pour pouvoir établir cette cartographie, pour chaque place de pilote, ce qui n'est pas acceptable dans de nombreuses situations, et notamment dans le cas discuté ci-dessus d'équipements militaires.

Un inconvénient de cette technique de l'art antérieur est donc qu'elle est fastidieuse, et très longue à mettre en oeuvre.

Un autre inconvénient de cette technique de l'art antérieur est qu'elle n'est pas adaptée à d'éventuelles variations de l'environnement du capteur. Notamment, le tableau de référence (« look up table »), ou le modèle de référence, perd de sa valeur en cas de déplacement d'un objet au sein du cockpit (tel que le déplacement du siège réglable du pilote, par exemple) ou en cas d'ajout ultérieur d'une pièce d'équipement dans l'avion d'armes ou l'hélicoptère de combat, car la performance de précision diminue alors.

Plusieurs autres techniques ont été développées pour compenser les perturbations magnétiques créées par les courants de Foucault induits dans les conducteurs.

Une première méthode, décrite notamment dans le document de brevet US 4, 829, 250, consiste à émettre des champs magnétiques alternatifs à fréquences harmoniques, et à déterminer par extrapolation en basse fréquence, où les perturbations des effets Foucault sont négligeables, la valeur de l'orientation à partir des orientations déterminées préalablement pour chacune des fréquences harmoniques, comme s'il n'y avait qu'une seule fréquence pour chaque estimation. En effet, les perturbations magnétiques dues aux courants de Foucault dépendent de la fréquence du champ magnétique, et de la conductivité du matériau dans lequel ils prennent naissance. On a constaté que ces perturbations diminuent avec la fréquence, pour disparaître à fréquence nulle.

Un inconvénient de cette technique de l'art antérieur est qu'elle n'est pas adaptée à la présence de matériaux ferromagnétiques dans l'environnement du capteur de position et d'orientation. Notamment, elle ne permet pas de filtrer efficacement les perturbations magnétiques dues aux matériaux ferromagnétiques, qui peuvent être importantes à basse fréquence.

Une deuxième méthode pour compenser les perturbations dues aux courants de Foucault, décrite notamment dans les documents de brevets US 4, 849, 692 et US 4, 945, 305, consiste à émettre des champs magnétiques (impulsions) continus au niveau de l'émetteur. Ceux-ci peuvent avoir une composante permanente, et la technique consiste alors à attendre que les courants de Foucault s'atténuent dans le temps pour effectuer la mesure au niveau du capteur. Il faut que l'impulsion soit suffisamment longue dans le temps pour que les courants de Foucault aient le temps de s'atténuer avant que l'on effectue la mesure, ou pour que l'estimation de la valeur en régime permanent soit précise.

Un inconvénient de cette technique de l'art antérieur est que les mesures sont effectuées à des cadences qui ne permettent pas d'atteindre le régime permanent et la précision est insuffisante. Si l'on attendait le régime permanent, cela limiterait beaucoup trop la dynamique de mesure.

Un autre inconvénient de cette technique de l'art antérieur est qu'elle n'est pas adaptée à la présence, dans l'environnement du capteur de position et d'orientation, de corps de type ferromagnétique. En effet, les perturbations d'origine ferromagnétique dépendent de la perméabilité magnétique du matériau et de la fréquence du champ d'excitation, de telle sorte que les perturbations magnétiques diminuent lorsque la fréquence augmente, selon un comportement inverse de celui des courants de Foucault.

Encore un autre inconvénient de cette technique de l'art antérieur est qu'elle n'est pas adaptée aux métaux conducteurs dans lesquels la durée nécessaire à l'atténuation des courants de Foucault est élevée.

On a également envisagé des techniques pour compenser les perturbations magnétiques dues aux corps de type ferromagnétique, et notamment, on a envisagé d'émettre des champs magnétiques à une fréquence élevée, par exemple de l'ordre de 8 à 14 kHz. En effet, à de telles fréquences, les perturbations dues aux corps de type ferromagnétique sont négligeables.

Un inconvénient de cette technique de l'art antérieur est qu'elle ne permet pas de compenser les perturbations magnétiques dues aux courants de Foucault, qui sont importantes à fréquence élevée.

Un autre inconvénient lié à la modélisation des champs perturbateurs d'origine ferromagnétique est qu'il est très difficile de déterminer un modèle de la magnétisation rémanente des objets de type ferromagnétique. En effet, la magnétisation rémanente dépend des propriétés métallurgiques de l'objet considéré, ainsi que de son passé thermique, mécanique, et géomagnétique. Son intensité et sa direction sont souvent inconnues pour un objet particulier.

Les documents US-A-5 767 669 et US-A-4 394 831 décrivent des dispositifs de mesure de la position d'un objet mobile par rapport à une structure fixe.

La plupart de ces techniques de l'art antérieur ont, par ailleurs, pour caractéristique commune, d'utiliser un fonctionnement en multiplexage temporel. Un cycle de mesure de l'orientation et de la position du capteur est décomposé en trois sous-cycles de mesure proprement dite, mettant en oeuvre l'émission d'un champ magnétique par chacune des voies de l'émetteur, et un sous-cycle de calibration, au cours duquel aucun champ magnétique n'est émis. Selon ces techniques, les phases de calibration supposent l'interruption temporaire de l'émission, et donc du fonctionnement du capteur.

Un inconvénient de ces techniques de l'art antérieur est, en conséquence, que la période des sous-cycles de mesure ou de calibration est faible car ces sous-cycles sont quatre fois plus courts que la période de sortie de la mesure, qui doit elle-même être suffisamment faible pour ne pas induire d'importants retards entre les grandeurs réelles et les grandeurs mesurées par le système du viseur de casque (appelés effets de traînage). Ces retards ont en effet des effets physiologiques sur le pilote, qui reçoit des informations de visualisation sur la visière de son casque, à une cadence égale à la période de sortie des informations de position et d'orientation du capteur.

Pour réduire autant que possible ces effets de traînage, on a tenté, selon les techniques de l'art antérieur, de réduire la période de sortie des informations.

Un inconvénient de cette réduction de la période de sortie des informations est qu'elle entraîne une diminution du rapport signal à bruit de la mesure magnétique du capteur. Or, une telle diminution n'est pas acceptable dans de nombreuses situations, et notamment dans le cas discuté ci-dessus d'équipements militaires, où le rapport signal à bruit doit être optimisé impérativement pour ainsi obtenir la précision maximale.

Encore un autre inconvénient des techniques de l'art antérieur est que les mesures des trois voies du capteur ne sont pas simultanées, ce qui génère des erreurs, en régime dynamique de la tête, dont les mouvements opérationnels peuvent atteindre une vitesse sensiblement égale à 120° par seconde.

L'invention a notamment pour objectif de pallier ces inconvénients de l'art antérieur.

Plus précisément, un objectif de l'invention est de fournir un dispositif et un procédé de filtrage de perturbations magnétiques, robuste et insensible aux environnements, diminuant les contraintes d'utilisation et de mise en oeuvre, et donc les coûts.

Un autre objectif de l'invention est de mettre en oeuvre un tel dispositif et un tel procédé de filtrage de perturbations magnétiques, fonctionnant en temps réel.

Un autre objectif de l'invention est de mettre en oeuvre un tel dispositif et un tel procédé de filtrage de perturbations magnétiques qui permette d'améliorer les viseurs de casque, utilisés notamment dans les avions d'armes et les hélicoptères de combat

Encore un autre objectif de l'invention est de fournir un procédé de filtrage de perturbations magnétiques, qui permette d'obtenir un viseur de casque d'intégration opérationnelle simplifiée dans les cockpits.

Encore un autre objectif de l'invention est de fournir un tel dispositif et un tel procédé de filtrage de perturbations magnétiques qui permette d'obtenir un viseur de casque de coût de production, de mise en oeuvre et d'utilisation opérationnelle réduit.

L'invention a encore pour objectif de mettre en oeuvre un tel dispositif et un tel procédé de filtrage de perturbations magnétiques, qui permette d'accroître les performances en précision statique et dynamique des viseurs de casque.

Un autre objectif de l'invention est de fournir un tel dispositif et un tel procédé de filtrage des perturbations magnétiques, qui soit adapté aux variations des perturbations, dues par exemple aux modifications dans le temps des caractéristiques des matériaux ou de l'environnement conducteur, aux équipements réglables ou aux pièces perturbatrices mobiles.

Encore un autre objectif de l'invention est de mettre en oeuvre un tel dispositif et un tel procédé de filtrage des perturbations magnétiques adapté aux viseurs de casque, qui permette notamment de réduire le temps d'immobilisation des avions ou des hélicoptères au sol par la suppression des cartographies magnétiques.

Ces objectifs, ainsi que d'autres qui apparaîtront par la suite sont atteints selon l'invention, à l'aide d'un dispositif de mesure de la position et de l'orientation d'un objet mobile par rapport à une structure fixe, dans un environnement magnétique perturbé, du type comprenant :

- un premier ensemble d'au moins deux bobines orthogonales d'émission de champ(s) magnénque(s) prédéterminés, solidaire de ladite structure fixe, et définissant un repère de référence ;
- un second ensemble d'au moins deux bobines orthogonales de réception de champ(s) magnétique(s), solidaire dudit objet mobile, et formant un capteur, chacune desdites bobines appartenant à une voie dudit capteur.

Le dispositif selon l'invention comprend :

- des moyens d'émission simultanée et continue de champs magnétiques prédéterminés, sur chacune des bobines dudit premier ensemble ;
- des premiers moyens de mesure, sur chacune desdites voies dudit capteur, de la somme vectorielle desdits champs magnétiques prédéterminés émis et de champs perturbateurs produits par l'environnement dudit dispositif ;
- des moyens d'évaluation desdits champs perturbateurs ;
- des premiers moyens d'estimation desdits champs magnétiques prédéterminés émis dans un environnement magnétique non perturbé, par suppression desdits champs perturbateurs évalués dans ladite somme vectorielle ;
- des moyens de calcul de la position et de l'orientation dudit objet mobile dans ledit repère de référence, à partir de ladite estimation desdits champs magnétiques prédéterminés.

Ainsi, l'invention repose sur une approche « en continu », tout à fait nouvelle et inventive de la mesure de la position et de l'orientation d'un objet mobile par rapport à une structure fixe, mettant en oeuvre un filtrage des perturbations magnétiques dans un environnement comprenant des corps conducteurs ou des corps de type ferromagnétique.

En effet, l'objet de l'invention est notamment d'identifier et de filtrer les perturbations magnétiques induites, en temps réel, pour rendre le système insensible à ces perturbations, et ainsi assurer un fonctionnement identique au fonctionnement en espace libre.

Selon une première caractéristique avantageuse de l'invention, les moyens d'évaluation des champs perturbateurs comprennent des moyens de projection de la somme vectorielle sur une première base de signaux orthonormés disjoints dans l'espace k/T, d'une part, où k est un entier et où T est la période d'intégration de la mesure de la somme vectorielle, et sur une seconde base transformée de Hilbert de la première base, d'autre part.

On peut ainsi identifier simplement le spectre des signaux reçus sur les bobines du second ensemble, et donc séparer, dans la somme vectorielle, les termes relatifs à chacune des bobines du premier ensemble.

Selon une deuxième caractéristique avantageuse de l'invention, les moyens d'évaluation des champs perturbateurs comprennent des moyens d'identification, au sein de la somme vectorielle projetée, des éléments variant dans l'espace k/T.

En effet, l'invention utilise la propriété selon laquelle les champs émis par les bobines du premier ensemble, en espace libre, sont constants dans l'espace k/T. L'identification des éléments de la somme vectorielle variant dans l'espace k/T permet donc de déterminer les champs perturbateurs créés par l'environnement du dispositif.

Avantageusement, les champs magnétiques prédéterminés émis sont obtenus par injection de courants dans les bobines du premier ensemble, et sont proportionnels aux courants injectés.

Cette caractéristique de l'invention permet avantageusement de considérer que les champs perturbateurs créés par l'environnement du dispositif sont une transformation linéaire des courants injectés dans les bobines du premier ensemble. Plus précisément, les champs perturbateurs sont une filtrée des courants injectés, au sens classique du filtrage.

Selon une technique avantageuse de l'invention, les moyens d'évaluation comprennent des seconds moyens d'estimation d'un modèle fréquentiel des champs perturbateurs ou d'un modèle fréquentiel de fonctions de transfert définies par un rapport des champs perturbateurs aux courants injectés.

Dans l'hypothèse où les courants injectés dans les bobines du premier ensemble sont unitaires et constants en fonction de k/T, l'invention met préférentiellement en oeuvre des moyens d'estimation d'un modèle fréquentiel des champs perturbateurs. Dans le cas contraire où les courants injectés ne sont pas constants dans l'espace k/T, on détermine préférentiellement un modèle fréquentiel des fonctions de transfert définies par le rapport des champs perturbateurs aux courants injectés dans les bobines du premier ensemble. Avantageusement, le modèle fréquentiel des fonctions de transfert comprend des premiers termes de modélisation des fonctions de transfert des effets perturbateurs du type des effets de Foucault $\vec{B}_{EF}(\vec{x}, j\omega)$, et des seconds termes de modélisation des fonctions de transfert des effets perturbateurs de type ferromagnétiques $\vec{B}_{FE}(\vec{x}, j\omega)$, les premiers et seconds termes de modélisation pouvant être polynomiaux en k/T ou du type :

$$- \qquad \vec{B}_{EF}(\vec{x}, j\frac{k}{T}) = \vec{B}_{EF}(\vec{x}) * \frac{jk\tau_{ef}}{T + jk\tau_{ef}}$$

$$- \qquad \vec{B}_{FE}(\vec{x}, j\frac{k}{T}) = \vec{B}_{FE}(\vec{x}) * \frac{T}{T + jk\tau_{fe}}$$

où $\tau_{ef}$ et $\tau_{fe}$ désignent des constantes de temps caractéristiques des matériaux dans lesquels prennent respectivement naissance les effets Foucault et les effets ferromagnétiques, où k est un entier, et où T est la période d'intégration de la mesure de la somme vectorielle.

Selon une variante avantageuse de l'invention, les champs magnétiques prédéterminés émis sont des champs pseudo aléatoires orthogonaux, dont la répartition spectrale en amplitude est proportionnelle à celle des courants injectés.

Cette caractéristique d'orthogonalité des champs magnétiques émis est particulièrement avantageuse pour séparer et extraire, dans la somme vectorielle reçue, les termes relatifs à chacune des bobines du premier ensemble. Notamment, l'orthogonalité des champs magnétiques émis permet de mettre en oeuvre des méthodes temporelles, par exemple fondées sur des modèles paramétriques des signaux, pour séparer et extraire les composantes relatives à chacune des bobines d'émission, au sein de la somme vectorielle.

Avantageusement, les champs magnétiques prédéterminés émis sont à supports spectraux disjoints.

Cette caractéristique de l'invention est particulièrement avantageuse lorsque les méthodes mises en oeuvre pour séparer et extraire, au sein de la somme vectorielle, les composantes relatives à chacune des bobines du premier ensemble, sont des méthodes spectrales.

Selon une caractéristique avantageuse de l'invention, le premier ensemble comprend trois bobines orthogonales d'émission de champ(s) magnétique(s) prédéterminé(s), et le second ensemble comprend trois bobines orthogonales de réception de champ(s) magnétique(s).

Cette caractéristique de l'invention est particulièrement avantageuse pour la détermination de l'orientation d'un système mobile par rapport à un référentiel, et notamment pour les viseurs de casque utilisés dans les avions d'armes ou les hélicoptères de combat, qui constituent un domaine d'application privilégié de l'invention. En effet, l'analyse des champs magnétiques émis par le premier ensemble formant un émetteur, et mesurés par le second ensemble formant un capteur, permet de déterminer la position et l'orientation du trièdre mobile du capteur par rapport au trièdre fixe de l'émetteur.

Selon une variante avantageuse de l'invention, les champs magnétiques prédéterminés émis présentent respectivement au moins deux fréquences de référence, ces fréquences de référence étant situées dans un domaine spectral choisi en tenant compte de l'environnement du dispositif, de façon à ce que les champs perturbateurs évoluent fortement dans le domaine spectral considéré.

De cette façon, on peut facilement identifier, dans la somme vectorielle reçue par les bobines du second ensemble, les termes relatifs aux champs perturbateurs, qui se distinguent des champs émis par les bobines du premier ensemble, par une forte variation dans le domaine spectral considéré.

Avantageusement, les champs magnétiques prédéterminés émis présentent respectivement au moins quatre fréquences de référence.

Selon une caractéristique avantageuse de l'invention, les fréquences de référence sont des multiples d'une fréquence prédéterminée, la fréquence prédéterminée étant sous-multiple d'une fréquence comprise entre 40 et 70Hz.

De manière évidente, cette caractéristique de l'invention est particulièrement avantageuse lorsque la fréquence prédéterminée est un sous-multiple de 50 Hz ou de 60 Hz.

Avantageusement, le dispositif selon l'invention comprend en outre :

- des deuxièmes moyens de mesure et de calibration desdits courants injectés ;
- des troisièmes moyens de mesure et de calibration des grandeurs électriques issues desdites voies dudit capteur ;
- des moyens d'acquisition numérique desdits champs émis, à la période d'acquisition $T_E$;
- des moyens de compensation des fonctions de transfert desdites voies dudit capteur.

Selon une variante avantageuse de l'invention, les moyens d'acquisition numérique sont précédés d'au moins un filtre anti-repliement.

Selon une caractéristique avantageuse de l'invention, les courants injectés sont formés d'une combinaison linéaire de premières composantes du type:

$$- \quad \dot{i}_1(n,k) = \sum_{k'=0}^{k'=K} a_{1,k} \sin(\frac{2\pi}{T}(k)nT_e)$$

$$- \quad \dot{i}_2(n,k) = \sum_{k'=0}^{k'=K} a_{2,k} \sin(\frac{2\pi}{T}(k)nT_e)$$

$$- \quad \dot{i}_3(n,k) = \sum_{k'=0}^{k'=K} a_{3,k} \sin(\frac{2\pi}{T}(k)nT_e)$$

où $k = k_1 + lk'$, $1 \geq 3$,

$k_1$, $k_2$, $k_3$, K, l, et n sont des entiers,

les coefficients $a_{jk}$ sont non nuls pour des valeurs particulières de k,

$T_E$ est la période d'acquisition desdits champs prédéterminés émis,

et $\forall$ i, j $\in$ [1 ; 3], $|k_i-k_j|=E(1/3)$, où E désigne la fonction partie entière.

Ainsi, les champs magnétiques émis par les bobines du premier ensemble sont des champs pseudo-aléatoires proportionnels aux composantes $i_1(n,k)$, $i_2(n,k)$ et $i_3(n,k)$.

Avantageusement, les moyens d'évaluation des champs perturbateurs comprennent en outre :

- des moyens de projection de la somme vectorielle, d'une part sur une première base des courants injectés, et d'autre part sur la transformée de Hilbert de cette première base, de façon à séparer la somme vectorielle en composantes, chacune de ces composantes correspondant au champ émis par l'une des bobines du premier ensemble ;

- des moyens de reconstruction, sur un support, temporel T, et à chaque période d'acquisition $T_E$, des composantes de la somme vectorielle sur la première base des courants injectés et sur la transformée de Hilbert de cette première base ;
- des moyens de constitution, dans l'espace k/T, à partir des composantes reconstruites sur la première base, et sur la transformée de Hilbert de la première base, de deux matrices $3\times3$, les neuf termes de chacune de ces matrices étant des fonctions de la variable k/T, où k est un entier majoré par $T/T_E$.

L'invention permet ainsi de déduire la matrice $3\times3$, estimée de la matrice des couplages émetteur-capteur en espace libre, à partir de laquelle on peut calculer la position et l'orientation du capteur dans le référentiel de l'émetteur.
Selon une variante avantageuse, le dispositif selon l'invention comprend en outre des moyens de filtrage numérique, visant à supprimer d'éventuelles perturbations rayonnées dans l'environnement dudit dispositif.
L'invention concerne également un procédé de mesure de la position et de l'orientation d'un objet mobile par rapport à une structure fixe, dans un environnement magnétique perturbé, un premier ensemble d'au moins deux bobines orthogonales d'émission de champ(s) magnétique(s) prédéterminés, solidaire de la structure fixe, définissant un repère de référence, et un second ensemble d'au moins deux bobines orthogonales de réception de champ(s) magnétique(s), solidaire de l'objet mobile, formant un capteur, chacune des bobines appartenant à une voie du capteur.
Un tel procédé selon l'invention comprend les étapes suivantes :

- émission simultanée et continue de champs magnétiques prédéterminés, sur chacune des bobines du premier ensemble ;
- mesure, sur chacune des voies du capteur, de la somme vectorielle des champs magnétiques prédéterminés émis et de champs perturbateurs produits par l'environnement du dispositif ;
- évaluation des champs perturbateurs ;
- estimation des champs magnétiques prédéterminés émis dans un environnement magnétique non perturbé, par suppression des champs perturbateurs évalués dans la somme vectorielle ;
- calcul de la position et de l'orientation de l'objet mobile dans le repère de référence, à partir de l'estimation des champs magnétiques prédéterminés.

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :

- la figure 1 présente un synoptique du dispositif mis en oeuvre dans un viseur de casque, comprenant un émetteur de champ(s) magnétique(s), un capteur de champ(s) magnétique(s), et des moyens de filtrage des perturbations magnétiques selon l'invention;
- la figure 2 illustre les différents traitements appliqués aux signaux mis en oeuvre dans le dispositif de la figure 1 ;
- la figure 3 illustre une réalisation fonctionnelle possible du dispositif de la figure 1.

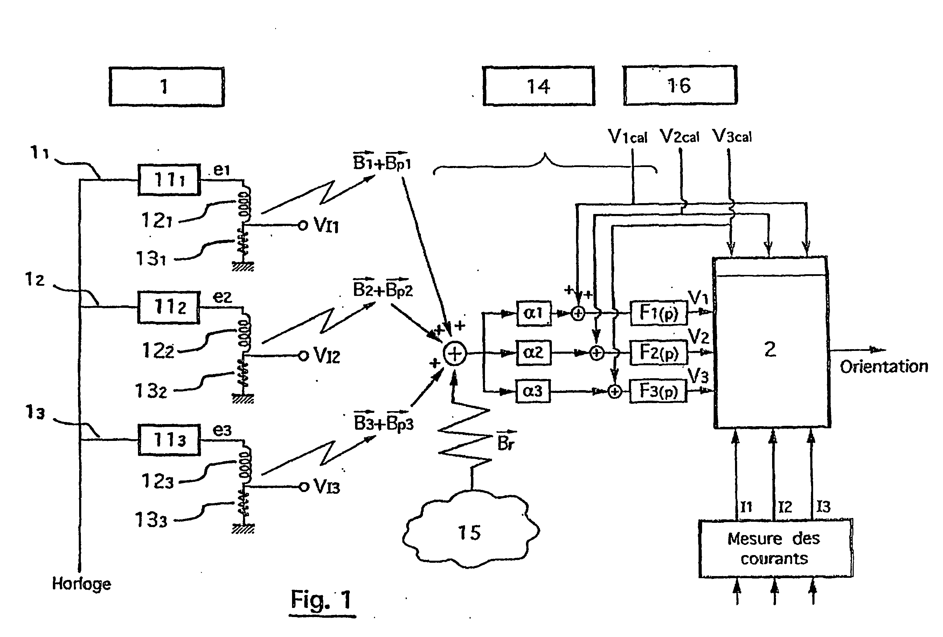

Le principe général de l'invention repose sur le fait que, d'une part, les champs magnétiques émis en espace libre sont proportionnels aux courants circulant dans les bobines qui les génèrent, et que, d'autre part, les champs perturbateurs qui prennent naissance dans l'environnement des bobines sont une transformation linéaire de ces courants.
On présente, en relation avec la figure 1, un mode de réalisation du filtrage de perturbations magnétiques, mis en oeuvre dans un viseur de casque. Dans la suite du document, on suppose que les courants injectés dans les bobines de l'émetteur sont unitaires et constants en fonction de k/T. On peut alors confondre, par souci de simplicité, les notions de champs magnétiques et de fonctions de transfert, définies par le rapport des champs magnétiques aux courants injectés dans les bobines de l'émetteur. De manière évidente, l'invention s'applique également au cas où les courants émis ne sont pas constants dans l'espace k/T. Il faut alors substituer, dans le document, la notion de fonction de transfert à celle de champ magnétique. Notamment, les modèles décrits dans la suite du document sont alors des modèles fréquentiels des fonctions de transfert, définies par un rapport des champs perturbateurs aux courants injectés.
Un bloc 1 de génération des signaux est constitué de trois voies $1_1$ à $1_3$. Chaque voie $1_1$ à $1_3$ comprend un générateur $11_1$ à $11_3$ de courant $i_{B1}$ à $i_{B3}$, une bobine $12_1$ à $12_3$ et une résistance $13_1$ à $13_3$. Le passage du courant dans les bobines $12_1$ à $12_3$ permet la création d'un champ magnétique $B_1$ à $B_3$ respectivement pour chacune des voies $1_1$ à $1_3$. Les courants $i_{B1}$ à $i_{B3}$ injectés dans les bobines $12_1$ à $12_3$ sont préférentiellement produits par des générateurs de courant d'impédance interne supérieure à 500kΩ. Selon un mode de réalisation préférentiel, les générateurs de courant $11_1$ à $11_3$ sont connectés à des bobines non accordées. L'invention s'applique bien sûr également au cas où les générateurs de courant $11_1$ à $11_3$ sont connectés à des bobines accordées.
Des perturbations magnétiques, qui prennent naissance dans les matériaux ferromagnétiques et/ou les matériaux conducteurs environnant le dispositif de viseur de casque illustré sur la figure 1, se superposent aux champs $B_1$ à $B_3$ sous la forme de champs magnétiques perturbateurs $B_{p1}$ à $B_{p3}$.

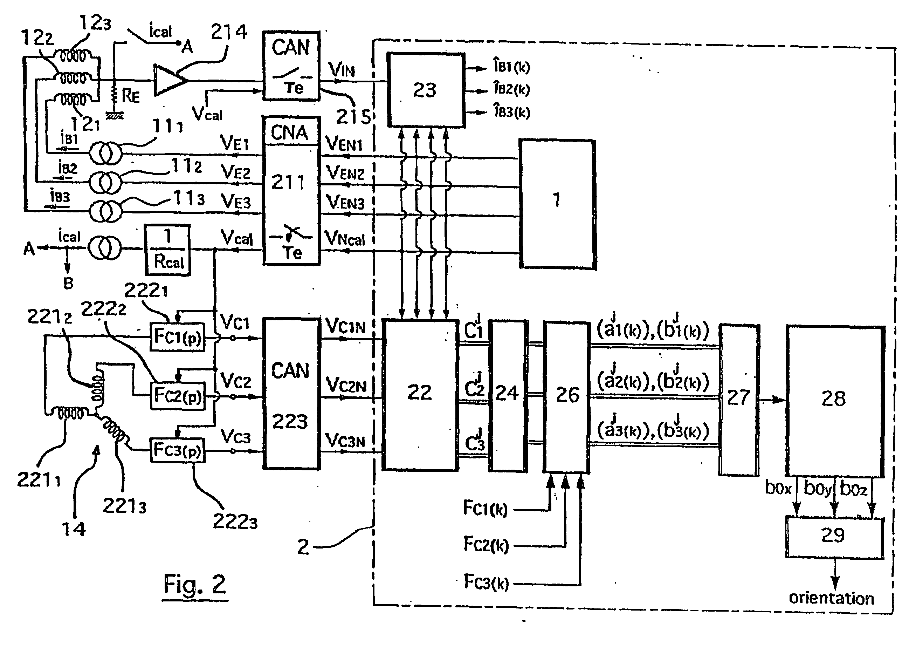

Le capteur 14 reçoit la somme des champs $B_1$ à $B_3$ émis respectivement par les voies $1_1$ à $1_3$ du bloc de génération des signaux 1, des champs perturbateurs $B_{p1}$ à $B_{p3}$, et d'éventuelles perturbations rayonnées 15 $B_r$. La somme des champs reçus par le capteur 14 est ensuite traitée selon une technique décrite en détail sur la figure 2.

Un bloc 16 de calibration du capteur délivre les signaux de calibration $V_{1cal}$, $V_{2cal}$ et $V_{3cal}$, qui ne font pas l'objet de la présente invention.

À l'issue des différents traitements appliqués aux champs reçus, le bloc 2, décrit plus en détails sur la figure 2, délivre en sortie la matrice $C_{ij}$ des couplages émetteur-capteur en espace libre, qui permet de calculer de façon connue la position et l'orientation du capteur 14 dans le repère de l'émetteur 1 du dispositif de viseur de casque.

On présente désormais en relation avec la figure 2, les différents traitements appliqués aux signaux mis en oeuvre dans le dispositif de la figure 1.

Des dispositifs et des signaux de calibration, qui ne font pas l'objet de l'invention, sont également représentés sur la figure 2.

On notera tout d'abord que les champs non perturbés émis par une bobine sont proportionnels aux courants circulant dans la bobine qui les génère, et que les champs perturbateurs créés par l'environnement du dispositif considéré sont une transformation linéaire de ces courants. Plus précisément, les champs perturbateurs sont une filtrée des courants circulant dans la bobine, au sens classique du filtrage.

Des champs magnétiques étant émis simultanément sur les trois bobines constituant l'antenne d'émission du dispositif de viseur de casque, il est nécessaire de pouvoir séparer les champs émis par chacune des bobines. Il existe plusieurs méthodes pour réaliser cette séparation, à savoir des méthodes temporelles, fondées par exemple sur des modèles paramétriques temporels des signaux, et des méthodes spectrales, qui consistent à estimer directement les spectres des signaux par projection de ces signaux sur des bases vectorielles.

La figure 2 illustre la mise en oeuvre d'une méthode d'identification spectrale directe, mais toute autre méthode peut être utilisée selon l'invention, et notamment une méthode paramétrique.

Sur la figure 2, un bloc 1 de génération de signaux délivre des signaux $V_{Enj}$ proportionnels aux courants $i_1$, $i_2$, $i_3$ et $i_4$, où $i_1$, $i_2$, $i_3$ sont des courants d'émission et où $i_4$ est un courant de calibration. On a, par exemple :

$$- \quad \dot{i}_1(n,k) = \sum_{k'=0}^{k'=K} a_{1,k}\sin(\frac{2\pi}{T}(k)nT_e)$$

$$- \quad \dot{i}_2(n,k) = \sum_{k'=0}^{k'=K} a_{2,k}\sin(\frac{2\pi}{T}(k)nT_e)$$

$$- \quad \dot{i}_3(n,k) = \sum_{k'=0}^{k'=K} a_{3,k}\sin(\frac{2\pi}{T}(k)nT_e)$$

$$- \quad \dot{i}_4(n,k) = \sum_{k'=0}^{k'=K} a_{4,k}\sin(\frac{2\pi}{T}(k)nT_e)$$

où $k = k_1 + lk'$, $l \geq 3$,

$k_1$, $k_2$, $k_3$, $k_4$, $K$, $l$, et $n$ sont des entiers,

les coefficients $a_{jk}$ sont non nuls pour des valeurs particulières de k (par exemple, $\forall$ k, j $a_{jk}$=1)

et $\forall$ i, j $\in$ [1 ; 4], $|k_i-k_j|$ =E(1/3), où E désigne la fonction partie entière

T représente la durée d'intégration de la mesure, et $T_E$ est une période d'échantillonnage.

En sortie du bloc 1, les signaux $V_{Enj}$=$R_{Ej}$*$i_j$ sont envoyés vers un convertisseur numérique analogique 211, où ils sont convertis en tensions analogiques $V_{Ej}$ à la cadence 1/$T_E$. Selon une variante de l'invention, la conversion se fait à une cadence multiple de 1/$T_E$.

Les tensions analogiques $V_{E1}$, $V_{E2}$ et $V_{E3}$ alimentent trois générateurs de courants $11_1$, $11_2$ et $11_3$ qui délivrent les courants $i_{B1}$, $i_{B2}$ et $i_{B3}$ circulant respectivement dans les trois bobines orthogonales d'émission $12_1$, $12_2$ et $12_3$.

Les grandeurs électriques issues des bobines $12_1$, $12_2$ et $12_3$ sont ensuite amplifiées par le bloc 214, et échantillonnées à la cadence $T_E$ à l'aide du convertisseur analogique numérique 215.

Le convertisseur analogique numérique 215 délivre une tension numérique $V_{1N} = R_E * \sum_{j=1}^{4} i_{B_j}$, qui alimente le bloc 23, $i_{B4}$ étant assimilé à $i_{cal}$. Le bloc 23 met en oeuvre une mesure des tensions $V_{1N}$, qui sont projetées sur des bases vectorielles $V_{Enj}(t, k)$. Selon un mode de réalisation préférentiel de l'invention, les bases vectorielles $V_{Enj}(t, k)$ sont orthonormées. Le bloc 23 permet donc de mesurer les courants $i_{B1}$, $i_{B2}$ et $i_{B3}$ circulant dans les trois bobines $12_1$, $12_2$ et $12_3$ d'émission, et délivre trois signaux $\hat{i}_{B1}(k)$, $\hat{i}_{B2}(k)$, et $\hat{i}_{B3}(k)$ estimés respectivement de $i_{B1}$, $i_{B2}$ et $i_{B3}$.

Les bobines orthogonales $221_1$, $221_2$ et $221_3$ constituant le capteur 14 reçoivent un champ magnétique correspondant à la somme des champs émis par les bobines d'émission $12_1$, $12_2$ et $12_3$ et de champs perturbateurs. Les blocs $222_1$, $222_2$ et $222_3$ schématisent les fonctions de transfert des trois voies du capteur 14. La tension de calibration $V_{cal}$ est séquentiellement envoyée vers chacun des blocs $222_1$, $222_2$ et $222_3$, sous la forme des signaux de calibration $V_{1cal}$, $V_{2cal}$ et $V_{3cal}$, délivrés par le bloc 16 de calibration du capteur illustré en figure 1. On a ainsi :

$$ - \quad V_{1cal} = V_{cal}(t_1 < t < t_2) $$

$$ - \quad V_{2cal} = V_{cal}(t_2 < t < t_3) $$

$$ - \quad V_{3cal} = V_{cal}(t_3 < t < t_4) $$

où $t_1$ à $t_4$ désignent des instants prédéterminés.

En sortie des blocs $222_1$, $222_2$ et $222_3$, les champs magnétiques reçus par les bobines de réception $222_1$, $222_2$ et $222_3$ sont transformés en tensions analogiques $V_{C1}$, $V_{C2}$ et $V_{C3}$. Le convertisseur analogique numérique échantillonne les tensions issues du capteur $V_{C1}$, $V_{C2}$ et $V_{C3}$ respectivement en tensions numériques $V_{C1N}$, $V_{C2N}$ et $V_{C3N}$. Ces tensions numériques alimentent le bloc 22.

Le bloc 22 met en oeuvre la projection des tensions $V_{C1N}$, $V_{C2N}$ et $V_{C3N}$ sur la base vectorielle $V_{Enj}(t, k)$, j variant de 1 à 4, et sur la base vectorielle qui est la transformée de Hilbert de la base $V_{Enj}(t, k)$, de manière à délivrer en sortie une matrice 3x3 complexe $C_i^j$, ainsi que certains termes liés aux signaux de calibration, qui ne font pas l'objet de la présente invention. Les vecteurs $C_i^1$, $C_i^2$, $C_i^3$, issus de la matrice $C_i^j$ alimentent le bloc 24 de séparation de la mesure et de la calibration.

Selon une technique qui ne fait pas l'objet de la présente invention, le bloc 24 permet d'effectuer une mesure séparée des courants et des tensions du dispositif, afin d'obtenir une meilleure précision de la mesure, sans influence de l'environnement et du phénomène de vieillissement. Les signaux $i_{B1}$, $i_{B2}$, $i_{B3}$ et $i_{cal} = i_4$ étant disjoints en fréquence, on peut aisément séparer, en sortie du capteur 14, les grandeurs électriques dépendant des signaux de calibration, des grandeurs électriques dépendant des champs mesurés par le capteur 14. Après projection des tensions numériques $V_{C1N}$, $V_{C2N}$ et $V_{C3N}$ sur les bases vectorielles orthogonales $V_{Enj}(t, k)$, on obtient la répartition de l'énergie des signaux dans l'espace k/T. Les bases $V_{Enj}(t, k)$ étant disjointes dans le domaine k/T, on peut ainsi, d'une part séparer les signaux de calibration des signaux de mesure, et d'autre part séparer les composantes de chacun des signaux reçus par le capteur 14.

La matrice $3 \times 3$ complexe $C_i^j$ est présentée, sous une forme cartésienne (Partie réelle, Partie imaginaire), en entrée du bloc de traitement 26. Les fonctions de transfert complexes $222_1$, à $222_3$ des trois voies du capteur 14 alimentent également le bloc 26, sous forme de fonctions de transfert en coordonnées polaires ($\rho_i(k)$, $\varphi_i(k)$). Après transformation des éléments de la matrice $C_i^j$ de la forme cartésienne (Partie réelle, Partie imaginaire) à une forme en coordonnées polaires ($\rho_{is}^j(k)$, $\varphi_{is}^j(k)$), le bloc 26 réalise une division du module $\rho_{is}^j(k)$ par le module $\rho_i(k)$, et une soustraction de l'angle $\varphi_i(k)$ à l'angle $\varphi_{is}^j(k)$, de manière à délivrer en sortie une matrice $3 \times 3$ complexe, corrigée des fonctions de transfert $222_1$ à $222_3$ du capteur 14, sous forme polaire ($\rho_{is\ cor}^j(k)$, $\varphi_{is\ cor}^j(k)$), que l'on transforme en coordonnées cartésiennes.

La matrice 3x3 complexe, corrigée des fonctions de transfert $222_1$ à $222_3$ du capteur 14, alimente ensuite le bloc 27 de formation de matrices normalisées, qui fournit au bloc 28 une matrice normalisée sous forme cartésienne $[a_i^j(k), b_i^j(k)]$, où les termes $a_i^j(k)$ représentent les parties réelles des termes de la matrice $3 \times 3$ complexe en entrée du bloc 27, sous forme de fréquences discrètes, et où les termes $b_i^j(k)$ représentent les parties imaginaires de ces termes. La normalisation consiste à réaliser l'opération suivante :

$$\rho_i^j(k) = \frac{\rho_{iscor}^j(k)}{\rho_{0i}^j(k)} \quad \text{où} \quad \rho_{0i}^j(k) = \sqrt{\left(a_i^j(k)\right)^2 + \left(b_i^j(k)\right)^2}.$$

Selon la notation employée, l'indice j désigne l'indice de la bobine d'émission du champ magnétique mesuré par le capteur 14, et l'indice i désigne l'une des composantes du champ émis $B^j$ par la bobine d'émission $12_j$. Le bloc 28 met en oeuvre une modélisation des champs reçus par le capteur 14, à partir des termes de modélisation suivants :

$$\vec{B}(\vec{x}, j\omega) = \left[\vec{B}_E(\vec{x}) + \vec{B}_{EF}(\vec{x}, j\omega) + \vec{B}_{FE}(\vec{x}, j\omega)\right] I_j(j\omega)e^{j\omega t}$$

et après division par $I_j(j\omega)e^{j\omega t}$ :

$$\vec{B}_{EF}\left(\vec{x}, j\frac{k}{T}\right) = \vec{B}_{EF}(\vec{x}) * \frac{jk\tau_{ef}}{T + jk\tau_{ef}} \tag{1}$$

$$\vec{B}_{FE}\left(\vec{x}, j\frac{k}{T}\right) = \vec{B}_{FE}(\vec{x}) * \frac{T}{T + jk\tau_{fe}}$$

où le terme de modélisation $\vec{B}_{EF}(\vec{x}, j\omega)$ représente les champs perturbateurs du type des effets Foucault (ou la fonction de transfert définie par le rapport des champs perturbateurs du type des effets Foucault aux courants injectés dans l'émetteur), et où le terme de modélisation $\vec{B}_{FE}(\vec{x}, j\omega)$ représente les champs perturbateurs de type ferromagnétique (ou la fonction de transfert correspondante).

Le bloc 28 met en oeuvre un algorithme reposant sur des techniques itératives connues, qui permet d'identifier un modèle non linéaire par rapport à ses paramètres. Ainsi, en minimisant un critère de somme quadratique des erreurs entre le modèle (1) ci-dessus et les données [$a_i^j(k)$, $b_i^j(k)$] en entrée du bloc 28, on obtient en sortie un champ $\vec{B}_E^j(\vec{x})$ (ou la fonction de transfert correspondante) constant en fonction de k/T. Selon une variante de l'invention, les constantes du modèle des champs perturbateurs variant avec la fréquence peuvent également être délivrées en sortie du bloc 28.

Le champ $\vec{B}_E^j(\vec{x})$ alimente le bloc 29 d'estimation du champ $\vec{B}_E(\vec{x})$, qui est le champ magnétique émis en espace libre, c'est-à-dire dans un espace magnétique non perturbé, constant en fonction du paramètre k. Le bloc 29 permet donc de former la matrice des champs qui seraient émis par les bobines $12_1$ à $12_3$ d'émission en espace libre, à partir de laquelle on estime, selon une technique qui ne fait pas l'objet de la présente invention, les coordonnées $\vec{x}$ du centre du capteur dans le repère de l'émetteur, de façon à déterminer la position et l'orientation du viseur de casque dans l'aéronef.

Le bloc 2 de la figure 2 représente l'ensemble des moyens mis en oeuvre dans le dispositif selon l'invention pour générer et acquérir les signaux utiles à la détermination de la position et de l'orientation du viseur de casque.

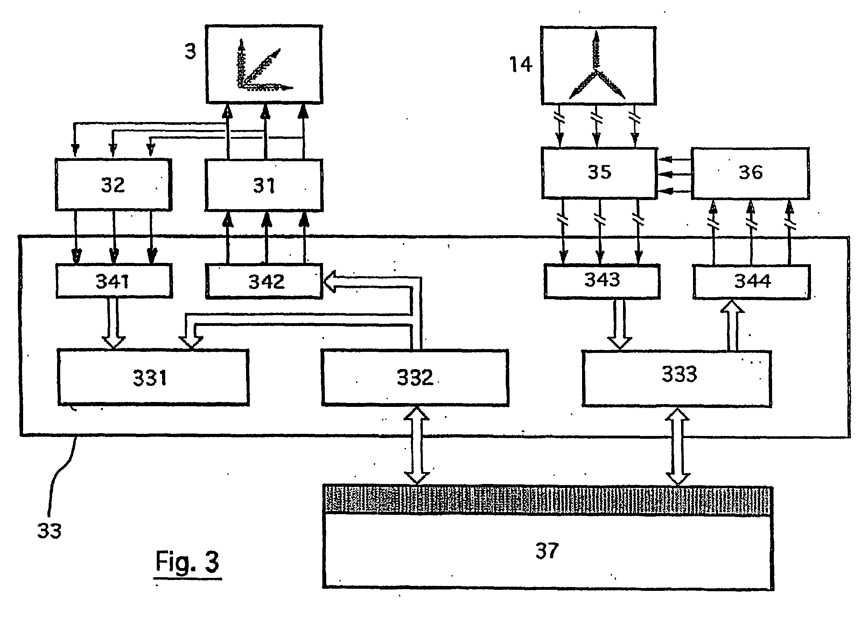

On présente désormais en relation avec la figure 3, une réalisation fonctionnelle possible du dispositif illustré par la figure 1. Le dispositif comprend deux antennes 3 et 14, constituées de trois bobines sensiblement orthogonales, et qui sont respectivement des antennes d'émission et de réception de champ(s) magnétique(s).

L'antenne d'émission 3 est connectée aux blocs 31 et 32, qui comprennent respectivement l'électronique d'émission et l'électronique de mesure de l'émission. Les blocs 31 et 32 sont en communication avec la carte d'interface et de calcul 33.

La carte 33 regroupe trois blocs fonctionnels principaux, à savoir un bloc 331 de calibration et de correction associé à l'antenne d'émission 3, un bloc 332 de génération de signaux numériques, et un bloc 333 de calibration et de correction associé au capteur 14.

Le bloc 331 de calibration et de correction de l'antenne d'émission 3 reçoit des données en provenance du bloc 332 de génération de signaux numériques, et du bloc 32 d'électronique de mesure de l'émission, par l'intermédiaire d'un convertisseur analogique numérique 341, qui échantillonne les signaux issus du bloc 32.

Les signaux numériques générés par le bloc 332 sont convertis en signaux analogiques par le convertisseur numérique analogique 342, puis envoyés vers le bloc 31 d'électronique d'émission.

Les champs reçus par le capteur 14 sont traités par le bloc 35 qui représente l'électronique de détection du capteur. Les signaux issus du bloc 35 sont échantillonnés par le convertisseur analogique numérique 343, puis envoyés vers le bloc 333 de calibration et de correction associé au capteur.

Le bloc 333 émet par ailleurs des signaux numériques qui alimentent le convertisseur numérique analogique 344, et qui sont envoyés, après conversion, vers le bloc 36 d'électronique de calibration, qui met en oeuvre la calibration du bloc 35 d'électronique de détection du capteur.

La carte d'interface et de calcul 33 échange des données avec un terminal 37, qui met notamment en oeuvre le calcul des filtrages des champs perturbateurs, l'élimination des champs perturbateurs dans la somme des champs reçus par le capteur 14, et le calcul de la ligne de visée du viseur de casque.

Bien que l'on ait décrit un système adapté aux aéronefs militaires, il est clair que l'invention peut être mise en oeuvre dans d'autres types d'appareils (véhicules par exemple), qu'ils soient militaires ou civils. Plus généralement, l'invention peut être adaptée à de très nombreux domaines, et notamment celui de la réalité virtuelle, sans s'écarter de la formulation des revendications.

## Revendications

1. Dispositif de mesure de la position et de l'orientation d'un objet mobile par rapport à une structure fixe, dans un environnement magnétique perturbé, du type comprenant :

   - un premier ensemble d'au moins deux bobines ($12_1$ à $12_3$) orthogonales d'émission de champ(s) magnétique(s) prédéterminés, solidaire de ladite structure fixe, et définissant un repère de référence ;
   - un second ensemble d'au moins deux bobines orthogonales ($221_1$ à $221_3$) de réception de champ(s) magnétique(s), solidaire dudit objet mobile, et formant un capteur (14), chacune desdites bobines appartenant à une voie dudit capteur ;
   - des premiers moyens de mesure, sur chacune desdites voies dudit capteur, de la somme vectorielle desdits champs magnétiques prédéterminés émis et de champs perturbateurs produits par l'environnement dudit dispositif ;
   - des moyens d'évaluation desdits champs perturbateurs ;
   - des premiers moyens d'estimation desdits champs magnétiques prédéterminés émis dans un environnement magnétique non perturbé, par suppression desdits champs perturbateurs évalués dans ladite somme vectorielle ;
   - des moyens (2 ; 37) de calcul de la position et de l'orientation dudit objet mobile dans ledit repère de référence, à partir de ladite estimation desdits champs magnétiques prédéterminés, **caractérisé en ce qu'**il comprend : des moyens d'émission (1) simultanée et continue de champs magnétiques prédéterminés, sur chacune des bobines dudit premier ensemble.

2. Dispositif selon la revendication 1, **caractérisé en ce que** lesdits moyens d'évaluation desdits champs perturbateurs comprennent des moyens de projection (22) de ladite somme vectorielle sur une première base de signaux orthonormés disjoints dans l'espace k/T, d'une part, où k est un entier et où T est la période d'intégration de la mesure de ladite somme vectorielle, et sur une seconde base transformée de Hilbert de ladite première base, d'autre part.

3. Dispositif selon la revendication 2, **caractérisé en ce que** lesdits moyens d'évaluation desdits champs perturbateurs comprennent des moyens d'identification, au sein de ladite somme vectorielle projetée, des éléments variant dans l'espace k/T.

4. Dispositif selon l'une quelconque des revendications 1 à 3, **caractérisé en ce que** lesdits champs magnétiques prédéterminés émis sont obtenus par injection de courants dans lesdites bobines ($12_1$ à $12_3$) dudit premier ensemble, et **en ce que** lesdits champs magnétiques prédéterminés émis sont proportionnels auxdits courants injectés.

5. Dispositif selon la revendication 4, **caractérisé en ce que** lesdits moyens d'évaluation comprennent des seconds moyens (28) d'estimation d'un modèle fréquentiel desdits champs perturbateurs ou d'un modèle fréquentiel de fonctions de transfert définies par un rapport desdits champs perturbateurs auxdits courants injectés.

6. Dispositif selon la revendication 5, **caractérisé en ce que** ledit modèle fréquentiel desdites fonctions de transfert comprend des premiers termes de modélisation desdites fonctions de transfert des effets perturbateurs du type des effets de Foucault $\vec{B}_{EF}(\vec{x}, j\omega)$, et des seconds termes de modélisation desdites fonctions de transfert des effets perturbateurs de type ferromagnétiques $\vec{B}_{FE}(\vec{x}, j\omega)$, lesdits premiers et seconds termes de modélisation pouvant être polynomiaux en k/T ou du type :

$$- \quad \vec{B}_{EF}(\vec{x}, j\frac{k}{T}) = \vec{B}_{EF}(\vec{x}) * \frac{jk\tau_{ef}}{T + jk\tau_{ef}}$$

$$- \quad \vec{B}_{FE}(\vec{x}, j\frac{k}{T}) = \vec{B}_{FE}(\vec{x}) * \frac{T}{T + jk\tau_{fe}}$$

où $\tau_{ef}$ et $\tau_{fe}$ désignent des constantes de temps caractéristiques des matériaux dans lesquels prennent respectivement naissance les effets Foucault et les effets ferromagnétiques, où k est un entier, et où T est la période d'intégration de la mesure de ladite somme vectorielle.

7. Dispositif selon l'une quelconque des revendications 4 à 6, **caractérisé en ce que** lesdits champs magnétiques prédéterminés émis sont des champs pseudo aléatoires orthogonaux, dont la répartition spectrale en amplitude est proportionnelle à celle desdits courants injectés.

8. Dispositif selon l'une quelconque des revendications 1 à 7, **caractérisé en ce que** lesdits champs magnétiques prédéterminés émis sont à supports spectraux disjoints.

9. Dispositif selon l'une quelconque des revendications 1 à 8, **caractérisé en ce que** ledit premier ensemble comprend trois bobines orthogonales d'émission de champ(s) magnétique(s) prédéterminé(s), et **en ce que** ledit second ensemble comprend trois bobines orthogonales de réception de champ(s) magnétique(s).

10. Dispositif selon l'une quelconque des revendications 1 à 9, **caractérisé en ce que** lesdits champs magnétiques prédéterminés émis présentent respectivement au moins deux fréquences de référence, lesdites fréquences de référence étant situées dans un domaine spectral choisi en tenant compte de l'environnement dudit dispositif, de façon à ce que lesdits champs perturbateurs évoluent fortement dans ledit domaine spectral.

11. Dispositif selon la revendication 10, **caractérisé en ce que** lesdits champs magnétiques prédéterminés émis présentent respectivement au moins quatre fréquences de référence.

12. Dispositif selon l'une quelconque des revendications 10 et 11, **caractérisé en ce que** lesdites fréquences de référence sont des multiples d'une fréquence prédéterminée, ladite fréquence prédéterminée étant sous-multiple d'une fréquence comprise entre 40 et 70Hz.

13. Dispositif selon l'une quelconque des revendications 4 à 12, **caractérisé en ce qu'**il comprend en outre :

   - des deuxièmes moyens de mesure et de calibration desdits courants injectés ;
   - des troisièmes moyens (16) de mesure et de calibration des grandeurs électriques issues desdites voies dudit capteur ;
   - des moyens d'acquisition numérique desdits champs émis, à la période d'acquisition $T_E$ ;
   - des moyens de compensation des fonctions de transfert ($222_1$ à $222_3$) desdites voies dudit capteur.

14. Dispositif selon la revendication 13, **caractérisé en ce que** lesdits moyens d'acquisition numérique sont précédés d'au moins un filtre anti-repliement.

15. Dispositif selon l'une quelconque des revendications 4 à 14, **caractérisé en ce que** lesdits courants injectés sont formés d'une combinaison linéaire de premières composantes du type:

$$- \quad \dot{\imath}_1 \, (n,k) = \sum_{k'=0}^{k'=K} a_{1,k} \sin\left(\frac{2\pi}{T}(k)nT_e\right)$$

$$- \quad \dot{\imath}_2 \, (n,k) = \sum_{k'=0}^{k'=K} a_{2,k} \sin\left(\frac{2\pi}{T}(k)nT_e\right)$$

$$- \quad \cdot\dot{\imath}_3 \, (n,k) = \sum_{k'=0}^{k'=K} a_{3,k} \sin\left(\frac{2\pi}{T}(k)nT_e\right)$$

où $k = k_1 + lk'$, $1 \geq 3$,

$k_1$, $k_2$, $k_3$, K, l, et n sont des entiers,

les coefficients $a_{jk}$ sont non nuls pour des valeurs particulières de k,

$T_E$ est la période d'acquisition desdits champs prédéterminés émis,

et $\forall$ i, j $\in$ [1 ; 3], $|k_i - k_j| = E(1/3)$, où E désigne la fonction partie entière.

**16.** Dispositif selon l'une quelconque des revendications 4 à 15, **caractérisé en ce que** lesdits moyens d'évaluation desdits champs perturbateurs comprennent en outre :

- des moyens de projection (22) de ladite somme vectorielle, d'une part sur une première base desdits courants injectés, et d'autre part sur la transformée de Hilbert de ladite première base, de façon à séparer ladite somme vectorielle en composantes, chacune desdites composantes correspondant au champ émis par l'une des bobines dudit premier ensemble ;
- des moyens de reconstruction, sur un support temporel T, et à chaque période d'acquisition $T_E$, desdites composantes sur ladite première base desdits courants injectés et sur la transformée de Hilbert de ladite première base ;
- des moyens de constitution, dans l'espace k/T, à partir desdites composantes reconstruites sur ladite première base, et sur la transformée de Hilbert de ladite première base, de deux matrices $3 \times 3$, les neuf termes de chacune desdites matrices étant des fonctions de la variable k/T, où k est un entier majoré par $T/T_E$.

**17.** Dispositif selon l'une quelconque des revendications 1 à 16, **caractérisé en ce qu'**il comprend en outre des moyens de filtrage numérique, visant à supprimer d'éventuelles perturbations rayonnées dans l'environnement dudit dispositif.

**18.** Procédé de mesure de la position et de l'orientation d'un objet mobile par rapport à une structure fixe, dans un environnement magnétique perturbé,

un premier ensemble d'au moins deux bobines ($12_1$ à $12_3$) orthogonales d'émission de champ(s) magnétique(s) prédéterminés, solidaire de ladite structure fixe, définissant un repère de référence,

un second ensemble d'au moins deux bobines ($221_1$ à $221_3$) orthogonales de réception de champ(s) magnétique(s), solidaire dudit objet mobile, formant un capteur (14), chacune desdites bobines appartenant à une voie dudit capteur,

- mesure, sur chacune desdites voies dudit capteur, de la somme vectorielle desdits champs magnétiques prédéterminés émis et de champs perturbateurs produits par l'environnement dudit dispositif ;
- évaluation desdits champs perturbateurs ;
- estimation desdits champs magnétiques prédéterminés émis dans un environnement magnétique non perturbé, par suppression desdits champs perturbateurs évalués dans ladite somme vectorielle ;
- calcul de la position et de l'orientation dudit objet mobile dans ledit repère de référence, à partir de ladite estimation desdits champs magnétiques prédéterminés,

**caractérisé en ce qu'**il comprend l'étape suivante:

- émission simultanée et continue de champs magnétiques prédéterminés, sur chacune des bobines dudit premier ensemble ;

## Claims

1. Device for measuring the position and the orientation of a mobile object with respect to a fixed structure, in a disturbed magnetic environment, of the type comprising:

   - a first assembly of at least two orthogonal coils ($12_1$ to $12_3$) for emitting predetermined magnetic field(s), secured to said fixed structure, and defining a reference frame;
   - a second assembly of at least two orthogonal coils ($221_1$ to $221_3$) for receiving magnetic field(s), secured to said mobile object, and forming a sensor (14), each of said coils belonging to a channel of said sensor;
   - first means of measurement, on each of said channels of said sensor, of the vector sum of said predetermined magnetic fields emitted and of disturbing fields produced by the environment of said device;
   - means of evaluation of said disturbing fields;
   - first means of estimation of said predetermined magnetic fields emitted in an undisturbed magnetic environment, by elimination of said disturbing fields evaluated in said vector sum;
   - means (2; 37) of calculation of the position and the orientation of said mobile object in said reference frame, from said estimation of said predetermined magnetic fields;

   **characterized in that** it comprises:

   - means (1) of simultaneous and continuous emission of predetermined magnetic fields, on each of the coils of said first assembly.

2. Device according to Claim 1, **characterized in that** said means of evaluation of said disturbing fields comprise means of projection (22) of said vector sum onto a first basis of disjoint orthonormal signals in the space k/T, on the one hand, where k is an integer and where T is the period of integration of the measurement of said vector sum, and onto a second basis which is the Hilbert transform of said first basis, on the other hand.

3. Device according to Claim 2, **characterized in that** said means of evaluation of said disturbing fields comprise means of identification, within said projected vector sum, of the elements varying in the space k/T.

4. Device according to any one of Claims 1 to 3, **characterized in that** said predetermined magnetic fields emitted are obtained by injection of currents into said coils ($12_1$ to $12_3$) of said first assembly, and **in that** said predetermined magnetic fields emitted are proportional to said injected currents.

5. Device according to Claim 4, **characterized in that** said means of evaluation comprise second means (28) of estimation of a frequency model of said disturbing fields or of a frequency model of transfer functions defined by a ratio of said disturbing fields to said injected currents.

6. Device according to Claim 5, **characterized in that** said frequency model of said transfer functions comprises first terms for modeling said transfer functions of the disturbing effects of the type of eddy effects $\vec{B}_{EF}(\vec{x}, j\omega)$, and second terms for modeling said transfer functions of the disturbing effects of ferromagnetic type $\vec{B}_{FE}(\vec{x}, j\omega)$, it being possible for said first and second modeling terms to be polynomials in k/T or of the type:

$$\vec{B}_{EF}\left(\vec{x}, j\frac{k}{T}\right) = \vec{B}_{EF}(\vec{x}) * \frac{jk\tau_{ef}}{T + jk\tau_{ef}}$$

$$\vec{B}_{FE}\left(\vec{x}, j\frac{k}{T}\right) = \vec{B}_{FE}(\vec{x}) * \frac{T}{T + jk\tau_{fe}}.$$

where $\tau_{ef}$ and $\tau_{fe}$ denote time constants characteristic of the materials in which the eddy effects and ferromagnetic effects respectively arise, where k is an integer, and where T is the period of integration of the measurement of said vector sum.

7. Device according to any one of Claims 4 to 6, **characterized in that** said predetermined magnetic fields emitted are orthogonal pseudorandom fields, whose spectral distribution in terms of amplitude is proportional to that of said injected currents.

8. Device according to any one of Claims 1 to 7, **characterized in that** said predetermined magnetic fields emitted have disjoint spectral supports.

9. Device according to any one of Claims 1 to 8, **characterized in that** said first assembly comprises three orthogonal coils for emitting predetermined magnetic field(s), and **in that** said second assembly comprises three orthogonal coils for receiving magnetic field(s).

10. Device according to any one of Claims 1 to 9, **characterized in that** said predetermined magnetic fields emitted exhibit respectively at least two reference frequencies, said reference frequencies being situated in a chosen spectral domain while taking account of the environment of said device, in such a way that said disturbing fields alter greatly in said spectral domain.

11. Device according to Claim 10, **characterized in that** said predetermined magnetic fields emitted exhibit respectively at least four reference frequencies.

12. Device according to any one of Claims 10 and 11, **characterized in that** said reference frequencies are multiples of a predetermined frequency, said predetermined frequency being a submultiple of a frequency lying between 40 and 70 Hz.

13. Device according to any one of Claims 4 to 12, **characterized in that** it furthermore comprises:

   - second means of measurement and of calibration of said injected currents;
   - third means (16) of measurement and of calibration of the electrical quantities emanating from said channels of said sensor;
   - means of digital acquisition of said emitted fields, with the acquisition period $T_E$;
   - means of compensation of the transfer functions ($222_1$ to $222_3$) of said channels of said sensor.

14. Device according to Claim 13, **characterized in that** said means of digital acquisition are preceded by at least one anti-aliasing filter.

15. Device according to any one of Claims 4 to 14, **characterized in that** said injected currents are formed of a linear combination of first components of the type:

$$- \quad \dot{i}_1(n,k) = \sum_{k'=0}^{k'=K} a_{1,k} \sin\left(\frac{2\pi}{T}(k)nT_e\right)$$

$$- \quad \dot{i}_2(n,k) = \sum_{k'=0}^{k'=K} a_{1,k} \sin\left(\frac{2\pi}{T}(k)nT_e\right)$$

$$- \quad \dot{i}_3(n,k) = \sum_{k'=0}^{k'=K} a_{3,k} \sin\left(\frac{2\pi}{T}(k)nT_e\right)$$

where $k = k_1 + lk'$, $l \geq 3$,
$k_1$, $k_2$, $k_3$, K, l, and n are integers,
the coefficients $a_{jk}$ are non zero for particular values of k,
$T_E$ is the period of acquisition of said emitted predetermined fields,

and $\forall i, j \in [1;3]$, $|k_i-k_j| = E (1/3)$, where E denotes the integer part function.

**16.** Device according to any one of Claims 4 to 15, **characterized in that** said means of evaluation of said disturbing fields furthermore comprise;

- means of projection (22) of said vector sum, on the one hand onto a first basis of said injected currents, and on the other hand onto the Hilbert transform of said first basis, in such a way as to separate said vector sum into components, each of said components corresponding to the field emitted by one of the coils of said first assembly;

- means of reconstruction, over a temporal support T and at each acquisition period $T_E$, of said components over said first basis of said injected currents and over the Hilbert transform of said first basis;

- means of construction, in the space k/T, from said components reconstructed over said first basis, and over the Hilbert transform of said first basis, of two 3x3 matrices, the nine terms of each of said matrices being functions of the variable k/T, where k is an integer bounded above by $T/T_E$.

**17.** Device according to any one of Claims 1 to 16, **characterized in that** it furthermore comprises means of digital filtering, aimed at eliminating any disturbances radiated in the environment of said device.

**18.** Process for measuring the position and the orientation of a mobile object with respect to a fixed structure, in a disturbed magnetic environment,

a first assembly of at least two orthogonal coils ($12_1$ to $12_3$) for emitting predetermined magnetic field(s), secured to said fixed structure, defining a reference frame,

a second assembly of at least two orthogonal coils ($221_1$ to $221_3$) for receiving magnetic field(s), secured to said mobile object, and forming a sensor (14), each of said coils belonging to a channel of said sensor,

- measurement, on each of said channels of said sensor, of the vector sum of said predetermined magnetic fields emitted and of disturbing fields produced by the environment of said device;

- evaluation of said disturbing fields;

- estimation of said predetermined magnetic fields emitted in an undisturbed magnetic environment, by elimination of said disturbing fields evaluated in said vector sum;

- calculation of the position and the orientation of said mobile object in said reference frame, from said estimation of said predetermined magnetic fields;

**characterized in that** it comprises the following step:

- simultaneous and continuous emission of predetermined magnetic fields, on each of the coils of said first assembly.

**Patentansprüche**

**1.** Vorrichtung zur Messung der Position und der Ausrichtung eines beweglichen Gegenstands bezüglich einer ortsfesten Struktur in einer gestörten magnetischen Umgebung, von der Art, die aufweist:

- eine erste Einheit von mindestens zwei orthogonalen Spulen ($12_1$ bis $12_3$) zur Emission eines vorbestimmten Magnetfelds (von vorbestimmten Magnetfeldern), die fest mit der ortsfesten Struktur verbunden ist und ein Bezugskoordinatensystem bildet;

- eine zweite Einheit von mindestens zwei orthogonalen Spulen ($221_1$ bis $221_3$) für den Empfang eines Magnetfelds (von Magnetfeldern), die fest mit dem beweglichen Gegenstand verbunden ist und einen Sensor (14) bildet, wobei jede der Spulen zu einem Kanal des Sensors gehört;

- erste Einrichtungen zur Messung, auf jedem der Kanäle des Sensors, der Vektorsumme der emittierten vorbestimmten Magnetfelder und von Störfeldern, die von der Umgebung der Vorrichtung erzeugt werden;

- Einrichtungen zur Ermittlung der Störfelder;

- erste Einrichtungen zur Schätzung der in einer nicht gestörten magnetischen Umgebung emittierten vorbestimmten Magnetfelder durch Unterdrückung der ermittelten Störfelder in der Vektorsumme;

- Einrichtungen (2; 37) zur Berechnung der Position und der Ausrichtung des beweglichen Gegenstands im Bezugskoordinatensystem ausgehend von der Schätzung der vorbestimmten Magnetfelder,

**dadurch gekennzeichnet, dass** sie aufweist:

- Einrichtungen (1) zum gleichzeitigen und kontinuierlichen Emittieren von vorbestimmten Magnetfeldern an jeder der Spulen der ersten Einheit.

2. Vorrichtung nach Anspruch 1, **dadurch gekennzeichnet, dass** die Einrichtungen zur Ermittlung der Störfelder Einrichtungen zur Projektion (22) der Vektorsumme einerseits auf eine erste Basis von orthonormierten, im Raum k/T getrennten Signalen, wobei k eine ganze Zahl und T die Integrationsperiode der Messung der Vektorsumme ist, und andererseits auf eine zweite, Hilbert-transformierte Basis der ersten Basis aufweisen.

3. Vorrichtung nach Anspruch 2, **dadurch gekennzeichnet, dass** die Einrichtungen zur Ermittlung der Störfelder Einrichtungen zur Identifikation der im Raum k/T variierenden Elemente innerhalb der projizierten Vektorsumme aufweisen.

4. Vorrichtung nach einem der Ansprüche 1 bis 3, **dadurch gekennzeichnet, dass** die emittierten vorbestimmten Magnetfelder durch Einspeisen von Strömen in die Spulen ($12_1$ bis $12_3$) der ersten Einheit erhalten werden, und dass die emittierten vorbestimmten Magnetfelder proportional zu den eingespeisten Strömen sind.

5. Vorrichtung nach Anspruch 4, **dadurch gekennzeichnet, dass** die Ermittlungseinrichtungen zweite Einrichtungen (28) zur Schätzung eines Frequenzmodells der Störfelder oder eines Frequenzmodells von Transferfunktionen aufweisen, die von einem Verhältnis der Störfelder zu den eingespeisten Strömen definiert werden.

6. Vorrichtung nach Anspruch 5, **dadurch gekennzeichnet, dass** das Frequenzmodell der Transferfunktionen erste Modellisierungsterme der Transferfunktionen der Störwirkungen vom Typ der Foucault-Effekte $\vec{B}_{EF}(\vec{x},\, j\,\omega)$ und zweite Modellisierungsterme der Transferfunktionen der Störwirkungen vom ferromagnetischen Typ $\vec{B}_{FE}(\vec{x},\, j\,\omega)$ aufweist, wobei die ersten und zweiten Modellisierungsterme polynomisch in k/T oder vom folgenden Typ sein können:

$$- \qquad \bar{B}_{EF}\left(\bar{x}, j\frac{k}{T}\right) = \bar{B}_{EF}(\bar{x}) * \frac{jk\tau_{ef}}{T + jk\tau_{ef}}$$

$$- \qquad \bar{B}_{FE}\left(\bar{x}, j\frac{k}{T}\right) = \bar{B}_{FE}(\bar{x}) * \frac{T}{T + jk\tau_{fe}}$$

wobei $\tau_{ef}$ und $\tau_{fe}$ für die Materialien charakteristische Zeitkonstanten sind, in denen die Foucault-Effekte bzw. die ferromagnetischen Effekte entstehen, wobei k eine ganze Zahl ist, und wobei T die Integrationsperiode der Messung der Vektorsumme ist.

7. Vorrichtung nach einem der Ansprüche 4 bis 6, **dadurch gekennzeichnet, dass** die emittierten vorbestimmten Magnetfelder orthogonale pseudozufällige Felder sind, deren spektrale Amplitudenverteilung proportional zu derjenigen der eingespeisten Ströme ist.

8. Vorrichtung nach einem der Ansprüche 1 bis 7, **dadurch gekennzeichnet, dass** die emittierten vorbestimmten Magnetfelder getrennte spektrale Träger aufweisen.

9. Vorrichtung nach einem der Ansprüche 1 bis 8, **dadurch gekennzeichnet, dass** die erste Einheit drei orthogonale Spulen zum Emittieren eines vorbestimmten Magnetfelds (von vorbestimmten Magnetfeldern) aufweist, und dass die zweite Einheit drei orthogonale Spulen zum Empfang eines Magnetfelds (von Magnetfeldern) aufweist.

10. Vorrichtung nach einem der Ansprüche 1 bis 9, **dadurch gekennzeichnet, dass** die emittierten vorbestimmten Magnetfelder je mindestens zwei Bezugsfrequenzen aufweisen, wobei die Bezugsfrequenzen sich in einem Spektralbereich befinden, der unter Berücksichtung der Umgebung der Vorrichtung ausgewählt wird, damit die Störfelder sich stark in dem Spektralbereich entwickeln.

**11.** Vorrichtung nach Anspruch 10, **dadurch gekennzeichnet, dass** die emittierten vorbestimmten Magnetfelder je mindestens vier Bezugsfrequenzen aufweisen.

**12.** Vorrichtung nach einem der Ansprüche 10 und 11, **dadurch gekennzeichnet, dass** die Bezugsfrequenzen Vielfache einer vorbestimmten Frequenz sind, wobei die vorbestimmte Frequenz ein Untervielfaches einer Frequenz zwischen 40 und 70Hz ist.

**13.** Vorrichtung nach einem der Ansprüche 4 bis 12, **dadurch gekennzeichnet, dass** sie außerdem aufweist:

- zweite Einrichtungen zur Messung und Kalibrierung der eingespeisten Ströme;
- dritte Einrichtungen (16) zur Messung und Kalibrierung der elektrischen Größen, die von den Kanälen des Sensors stammen;
- Einrichtungen zur digitalen Erfassung der emittierten Felder in der Erfassungsperiode $T_E$;
- Einrichtungen zum Kompensieren der Transferfunktionen ($222_1$ bis $222_3$) der Kanäle des Sensors.

**14.** Vorrichtung nach Anspruch 13, **dadurch gekennzeichnet, dass** vor den Einrichtungen zur digitalen Erfassung mindestens ein Anti-Aliasing-Filter liegt.

**15.** Vorrichtung nach einem der Ansprüche 4 bis 14, **dadurch gekennzeichnet, dass** die eingespeisten Ströme von einer linearen Kombination erster Komponenten des folgenden Typs gebildet werden:

$$- \quad i_1(n,k) = \sum_{k'=0}^{k'=K} a_{1,k}\sin\left(\frac{2\pi}{T}(k)nT_e\right)$$

$$- \quad i_2(n,k) = \sum_{k'=0}^{k'=K} a_{2,k}\sin\left(\frac{2\pi}{T}(k)nT_e\right)$$

$$- \quad i_3(n,k) = \sum_{k'=0}^{k'=K} a_{3,k}\sin\left(\frac{2\pi}{T}(k)nT_e\right)$$

wobei gilt $k = k_1 + lk'$, $l \geq 3$,
$k_1$, $k_2$, $k_3$, K, l und n ganze Zahlen sind,
die Koeffizienten $a_{jk}$ für besondere Werte von k ungleich Null sind,
$T_E$ die Erfassungsperiode der emittierten vorbestimmten Felder ist,
und $\forall i, j \in [1; 3]$, $|k_i - k_j| = E(l/3)$, wobei E die Ganzteilfunktion bezeichnet.

**16.** Vorrichtung nach einem der Ansprüche 4 bis 15, **dadurch gekennzeichnet, dass** die Einrichtungen zur Ermittlung der Störfelder außerdem aufweisen:

- Einrichtungen (22) zur Projektion der Vektorsumme einerseits auf eine erste Basis der eingespeisten Ströme und andererseits auf die Hilbert-Transformation der ersten Basis, um die Vektorsumme in Komponenten aufzuteilen, wobei jede der Komponenten dem von einer der Spulen der ersten Einheit emittierten Feld entspricht;
- Einrichtungen zur Rekonstruktion auf einem zeitlichen Träger T und in jeder Erfassungsperiode $T_E$ der Komponenten auf der ersten Basis der eingespeisten Ströme und auf der Hilbert-Transformation der ersten Basis;
- Einrichtungen zur Bildung, im Raum k/T, ausgehend von den auf der ersten Basis und auf der Hilbert-Transformation der ersten Basis rekonstruierten Komponenten, von zwei 3x3-Matrizen, wobei die neun Terme jeder der Matrizen Funktionen der Variablen k/T sind, wobei k eine ganze Zahl erhöht um $T/T_E$ ist.

**17.** Vorrichtung nach einem der Ansprüche 1 bis 16, **dadurch gekennzeichnet, dass** sie außerdem digitale Filtereinrichtungen aufweist, die dazu bestimmt sind, mögliche Störungen zu unterdrücken, die in die Umgebung der Vorrichtung ausgestrahlt werden.

18. Verfahren zur Messung der Position und der Ausrichtung eines beweglichen Gegenstands bezüglich einer ortsfesten Struktur in einer gestörten magnetischen Umgebung,

wobei eine erste Einheit von mindestens zwei orthogonalen Spulen ($12_1$ bis $12_3$) zum Emittieren eines vorbestimmten Magnetfelds (von vorbestimmten Magnetfeldern), die fest mit der ortsfesten Struktur verbunden ist, ein Koordinatensystem definiert,

wobei eine zweite Einheit von mindestens zwei orthogonalen Spulen ($221_1$ bis $221_3$) für den Empfang eines Magnetfelds (von Magnetfeldern), die fest mit dem beweglichen Gegenstand verbunden ist, einen Sensor (14) bildet, wobei jede der Spulen zu einem Kanal des Sensors gehört,

- Messung, auf jedem der Kanäle des Sensors, der Vektorsumme der emittierten vorbestimmten Magnetfelder und von Störfeldern, die von der Umgebung der Vorrichtung erzeugt werden;
- Ermittlung der Störfelder;
- Schätzung der in einer nicht gestörten magnetischen Umgebung emittierten vorbestimmten Magnetfelder durch Unterdrückung der ermittelten Störfelder in der Vektorsumme;
- Berechnung der Position und der Ausrichtung des beweglichen Gegenstands im Bezugskoordinatensystem ausgehend von der Schätzung der vorbestimmten Magnetfelder,

**dadurch gekennzeichnet, dass** es den folgenden Schritt aufweist:

- gleichzeitiges und kontinuierliches Emittieren von vorbestimmten Magnetfeldern auf jeder der Spulen der ersten Einheit.

Fig. 1

Fig. 2

Fig. 3